# EUROPÄISCHE PATENTSCHRIFT

(11) **EP 0 967 408 B1**
(45) Veröffentlichungstag und Bekanntmachung des Hinweises auf die Patenterteilung: **24.08.2005**
(21) Anmeldenummer: 99110529.7
(22) Anmeldetag: 01.06.1999
(51) Int. Cl.: F16F 9/02, F16F 9/48

(54) **Längenverstellbare Gasfeder**
Gas spring, adjustable in length
Ressort à gaz réglable en longueur

(30) Priorität: 22.06.1998 DE 19827657
(43) Veröffentlichungstag der Anmeldung: 29.12.1999
(73) Patentinhaber: SUSPA Holding GmbH, 90518 Altdorf (DE)
(72) Erfinder: Böhm, Walter, 90537 Feucht (DE); Weisser, Frank, 91257 Pegnitz (DE)
(74) Vertreter: Rau, Manfred

(56) Entgegenhaltungen:
- DE-A- 1 812 282
- DE-A- 2 907 100

## Beschreibung

Die Erfindung betrifft eine längenverstellbare Gasfeder.

Derartige längenverstellbare Gasfedern sind beispielsweise aus der DE 18 12 282 C2 (entsprechend US-Patent 3,656,593) oder der EP 0 789 157 (entsprechend US Ser.No. 08/797 627) als sogenannte Zwei-Rohr-Gasfedern bekannt, deren Gehäuse aus einem Außenzylinder und einem Innenzylinder bestehen, zwischen denen ein Ringraum ausgebildet ist. An einem Ende des Gehäuses ist ein Ventil vorgesehen. Aus dem anderen Ende ist eine Kolbenstange herausgeführt, an deren innerem Ende ein den Raum im Innenzylinder in zwei Teil-Gehäuseräume teilender Kolben angeordnet ist. Des weiteren sind längenverstellbare Gasfedern als sogenannte Ein-Rohr-Gasfedern ausgebildet, bei denen im Kolben ein Ventil ausgebildet ist, das von außen durch die Kolbenstange hindurch betätigbar ist.

Diese bekannten längenverstellbaren Gasfedern werden im wesentlichen als Längenverstellelemente in höhenverstellbaren Stuhlsäulen verwendet. Ein Problem besteht darin, daß bei weitgehend in die Gasfeder eingefahrener Kolbenstange bei geschlossenem Ventil der Federungskomfort für einen auf einem Stuhlsitz sitzenden Benutzer gering ist, da beim Hinsetzen, insbesondere von schwergewichtigen Personen, ein Durchschlagen der Gasfeder erfolgen kann.

Zur Lösung dieses Problems ist es aus der dem Oberbegriff des Anspruchs 1 entsprechenden DE 29 07 100 C2 (entsprechend US-Patent 4,318,536) für eine Zwei-Rohr-Gasfeder bereits bekannt geworden, in dem dem Ventil zugewandten Teil-Gehäuseraum einen Ventilraum auszubilden und mit dem Kolben ein zum Ventilraum hin vorstehendes, in einer vorgegebenen Einschubstellung der Kolbenstange abdichtend in den Ventilraum eindringendes und diesen von dem Teil-Gehäuseraum abtrennendes Verschließelement zu verbinden. Als Randbedingung ist hierzu angegeben, daß bei durch das Verschließelement verschlossenem Ventilraum der Quotient der Querschnittsflächen von Kolbenringfläche und Fläche des Verschließelementes größer ist als der Quotient des Volumens eines Restraumes und des Volumens des Ventilraums. Hierdurch wird eine zuverlässig wirkende Endlagenfederung erreicht; der konstruktive Aufwand ist allerdings beträchtlich.

Der Erfindung liegt die Aufgabe zugrunde, eine längenverstellbare Gasfeder der gattungsgemäßen Art so auszugestalten, daß mit einfachen Mitteln eine komfortable Tiefenfederung bzw. Endlagenfederung erreicht wird.

Diese Aufgabe wird erfindungsgemäß durch die Merkmale im Kennzeichnungsteil des Anspruches 1 gelöst. Die erfindungsgemäße Einrichtung zum Verschließen des Ventils kann ohne besondere Maßnahmen als zusätzliches Bauteil in eine ansonsten unveränderte längenverstellbare Gasfeder eingelegt werden. Das geschilderte Durchschlagen der Gasfeder tritt nicht mehr ein.

Die Unteransprüche geben vorteilhafte und z. T. erfinderische Ausgestaltungen wieder.

Weitere Merkmale, Vorteile und Einzelheiten der Erfindung ergeben sich aus der nachfolgenden Beschreibung von vier Ausführungsbeispielen anhand der Zeichnung. Es zeigt:
- Fig. 1: eine längenverstellbare Gasfeder im Längsschnitt mit einer ersten Einrichtung zum Verschließen des Ventils in einer vorgegebenen Einschubstellung der Kolbenstange,
- Fig. 2: die Gasfeder nach Figur 1 in in ein Standrohr eingebautem Zustand, ebenfalls im Längsschnitt,
- Fig. 3: eine längenverstellbare Gasfeder mit einer zweiten Einrichtung,
- Fig. 4: eine längenverstellbare Gasfeder mit einer dritten Einrichtung und
- Fig. 5: eine längenverstellbare Gasfeder mit einer vierten Einrichtung.

Die in den Zeichnungsfiguren 1 bis 5 dargestellte längenverstellbare Gasfeder weist ein im wesentlichen zylindrisches Gehäuse 1 auf. Es besteht aus einem konzentrisch zur Mittel-Längs-Achse 2 angeordneten Außenzylinder 3 und einem ebenfalls konzentrisch in diesem angeordneten Innenzylinder 4, die radialen Abstand voneinander aufweisen, so daß zwischen ihnen ein Ringraum 5 gebildet wird. Im Innenzylinder 4 ist ein Kolben 6 verschiebbar angeordnet, der an einem Ende einer Kolbenstange 7 angebracht ist. Der Kolben 6 ist mittels einer Dichtung 8 gegenüber der Innenwand 9 des Innenzylinders 4 abgedichtet. Die Kolbenstange 7 ist aus einem Ende des Gehäuses 1 aus diesem herausgeführt. Sie ist hierzu in einer Dichtungs-Führungs-Einheit 10 geführt, die das Gehäuse 1 am Kolbenstangenaustritt gasdicht abschließt und die Kolbenstange 7 konzentrisch zur Achse 2 führt.

Der Kolben 6 teilt den Innenraum des Innenzylinders 4 in zwei Teil-Gehäuseräume 11, 12. Der zwischen dem Kolben 6 und der Dichtungs-Führungs-Einheit 10 ausgebildete Teil-Gehäuseraum 11 ist mittels mindestens einer Überströmöffnung 13 ständig mit dem Ringraum 5 verbunden.

An dem dem Kolbenstangenaustritt entgegengesetzten Ende ist ein Ventil 14 vorgesehen, mittels dessen der zwischen dem Kolben 6 und dem Ventil 14 ausgebildete Teil-Gehäuseraum 12 über den Ringraum 5, die Überströmöffnung 13 mit dem anderen Teil-Gehäuseraum 11 und umgekehrt verbunden werden kann. Das Ventil 14 weist einen Ventilkörper 15 auf, der den Innenzylinder 4 relativ zum Außenzylinder 13 zentriert, den Teil-Gehäuseraum 12 zum Ringraum 5 abdichtet, den Innenzylinder 4 in Richtung der Achse 2 festlegt und das Gehäuse 1 gasdicht nach außen abdichtet. Im Ventilkörper 15 ist eine konzentrische Ausnehmung 16 angeordnet, in der ein Ventil-Betätigungsstift 17 angeordnet ist, der nach außen aus dem Ventilkörper 15 herausragt. Der Ringraum 5 ist ständig mittels eines Überströmkanals 18 mit der Ausnehmung verbunden. Beim Einschieben des Ventils-Betätigungsstiftes 17 von außen in den Ventilkörper 15, also in Richtung zum Teil-Gehäuseraum 12 hin, wird die Ausnehmung 16 mit dem benachbarten Teil-Gehäuseraum 12 verbunden, d. h. das Ventil 14 wird geöffnet. Hierbei kann auf dem bereits geschilderten Weg Druckgas vom Teil-Gehäuseraum 11 zum Teil-Gehäuseraum 12 und umgekehrt fließen, wodurch eine Längenverstellung der Gasfeder möglich ist.

An dem ventilseitigen Ende des Gehäuses 1 ist der Außenzylinder 3 zu einem sich konisch verjüngenden Befestigungsabschnitt 19 verformt, dessen Rand 20 nach innen umgebogen ist. Gegen diesen Rand liegt ein Distanzstück 21 an, das auch als Widerlager für den Ventilkörper 15 dient. Im Distanzstück 21 ist ein gegen den Ventil-Betätigungsstift 17 anliegender Schieber 22 durch elastisches Einrasten gehalten, der zur Betätigung des Betätigungsstiftes 17 von außen dient. Soweit die Gasfeder bis hierher beschrieben ist, ist sie in vollem Umfang aus der EP 0 789 157 A (entsprechend US Ser.No. 08/797,627) bekannt, wo sie noch detaillierter beschrieben ist, worauf verwiesen wird.

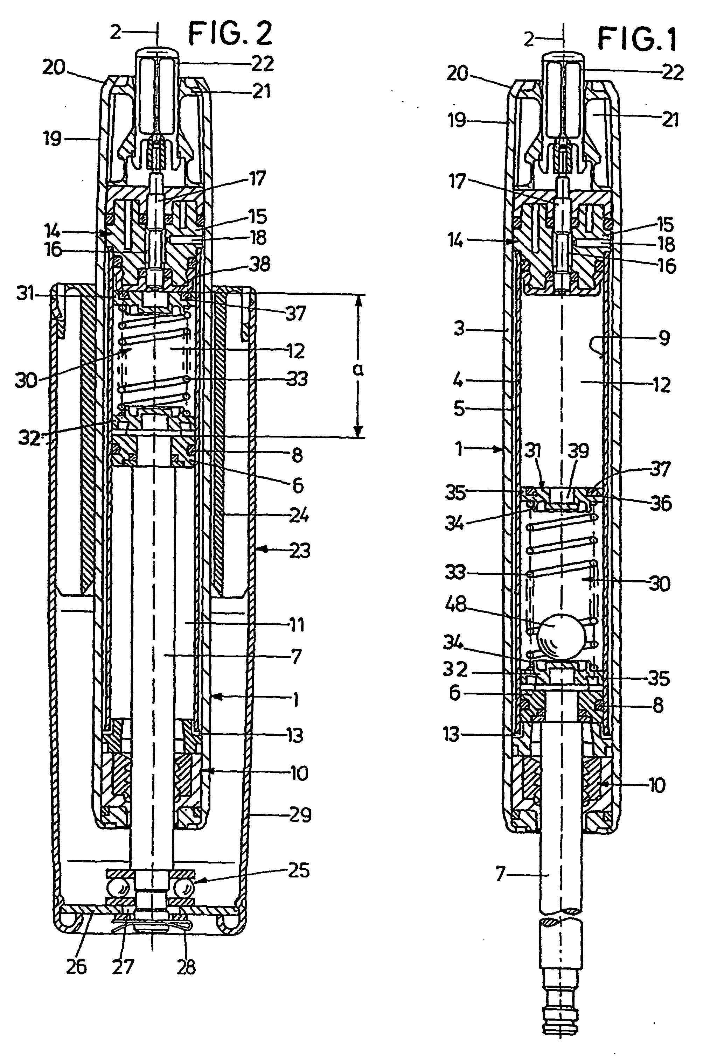

Das wesentliche Einsatzgebiet der Gasfeder ergibt sich aus Figur 2. Dort ist eine längenverstellbare Stuhlsäule dargestellt, die ein Standrohr 23 aufweist, in dem eine das Gehäuse 1 der Gasfeder führende Führungsbüchse 24 konzentrisch zur Achse 2 ausgebildet ist. Das außerhalb des Gehäuses 1 befindliche freie Ende der Kolbenstange 7 ist über ein Drehlager 25 auf einem Boden 26 des Standrohres 23 abgestützt und durch eine Öffnung 27 im Boden 26 durch diesen hindurchgeführt. An dessen Unterseite ist sie mittels eines Sicherungsbügels 28 befestigt. Das Standrohr 23 weist anschließend an den Boden 26 einen Konusabschnitt 29 auf, der in einer entsprechenden Nabe eines Fußgestells eines Stuhls eingesetzt wird. Der sich konisch verjüngende Befestigungsabschnitt 19 der Gasfeder wird in eine an der Unterseite des Sitzes eines Stuhls befindliche Aufnahme eingesetzt. Die Betätigung des Betätigungsstiftes 17 über den Schieber 22 erfolgt mittels eines an der Unterseite des Stuhlsitzes angebrachtes Gestänge. Dies ist in der Praxis allgemein bekannt und weit verbreitet.

Die auf die Kolbenstange 7 bei geöffnetem Ventil 14 wirkenden Ausschubkräfte ergeben sich aus dem Gasdruck im Inneren der Gasfeder multipliziert mit der Querschnittsfläche der Kolbenstange 7. Wenn das Ventil 14 geschlossen ist und auf dem Stuhl eine Person sitzt, dann federt der Kolben 6 mit seiner vollen Fläche gegen den Gasdruck im oberen Teil-Gehäuseraum 12. Diese Kraft nimmt also stärker zu als die Ausschubkraft. Insbesondere wenn die Kolbenstange 7 mit dem Kolben 6 verhältnismäßig tief in das Gehäuse 1, also bis in die Nähe des Ventils 14 eingefahren ist, wenn also der Teil-Gehäuseraum 12 verhältnismäßig klein geworden ist, dann kann bei geschlossenem Ventil 14 und einem weiteren Einfedern der Kolbenstange 7 in das Gehäuse 1 ein Durchschlagen der Gasfeder eintreten. Die Konsequenz ist, daß eine sogenannte Tiefenfederung, also eine komfortable Federung beim Sitzen auf einem Stuhl, nicht mehr gegeben ist. Dies gilt insbesondere, wenn schwergewichtige Personen auf dem Stuhl sitzen.

Um eine solche komfortable Tiefenfederung zu erhalten, ist eine Einrichtung 30 vorgesehen, durch die verhindert wird, daß die Kolbenstange über einen vorgegebenen Abstand a des Kolbens 6 vom Ventil 14 hinaus in das Gehäuse 1 gefahren wird. Durch diese Einrichtung 30 wird also sichergestellt, daß der Teil-Gehäuseraum 12 mindestens eine vorgegebene Länge a aufweist, so daß die Gasfeder auch bei geschlossenem Ventil 14 komfortable Sitz-Federungseigenschaften aufweist.

Beim Ausführungsbeispiel nach Figuren 1 und 2 besteht die Einrichtung 30 aus zwei frei im Innenzylinder 4 verschiebbaren Schwimm-Kolben 31, 32, zwischen denen eine weiche Schraubenfeder 33 angeordnet ist, die jeweils auf einen Ringbund 34 der Schwimm-Kolben 31, 32 aufgerastet ist. Die Schwimm-Kolben 31, 32 haben gegenüber der Innenwand 9 des Innenzylinders 4 soviel Spiel, daß ein in der Zeichnung nicht erkennbarer Durchström-Kanal 35 gebildet wird, so daß Druckgas von einer Seite jedes Schwimm-Kolbens 31, 32 auf dessen andere Seite übertreten kann. Der dem Ventil 14 zugewandte Schwimm-Kolben 31 weist auf seiner dem Ventilkörper 15 zugewandten Seite eine Ringnut 36 auf, in der eine Ringdichtung 37 angeordnet ist, die in unbelastetem Zustand über den Schwimm-Kolben 31 vorsteht. Sie ist konzentrisch zur Achse 2 angeordnet. Ihr Durchmesser ist größer als der der Ausnehmung 16 am Austritt in den Teil-Gehäuseraum 12.

Wenn ausgehend von der in Figur 1 dargestellten Stellung mit völlig aus dem Gehäuse 1 ausgefahrener Kolbenstange 7 das Ventil 14 geöffnet wird, dann kann die Kolbenstange gegen die oben angesprochene entsprechende Gegenkraft in das Gehäuse 1 eingeschoben werden, weil die Verhältnisse genau so sind, als wenn die Einrichtung 30 nicht vorhanden wäre. Wenn in der in Figur 2 dargestellten Stellung der Schwimm-Kolben 31 zur Anlage am Ventilkörper 15 kommt, dann liegt die Ringdichtung 37 dicht gegen die ihr zugewandte als Dichtfläche 38 dienende Fläche des Ventilkörpers 15 an. Im Schwimm-Kolben 31 ist ein Freiraum 39 ausgebildet, in den der Ventil-Betätigungsstift 17 beim Öffnen des Ventils 14 eintreten kann, ohne daß der Schwimm-Kolben 31 von der Dichtfläche 38 abgehoben wird. Auch wenn das Ventil 14 geöffnet ist, kann Druckgas weder aus dem Teil-Gehäuseraum 12 in das Ventil und weiter oder umgekehrt in den Teil-Gehäuseraum 12 strömen. Durch die Einrichtung 30 wird also das Ventil 14 außer Funktion gesetzt und völlig geschlossen. Die Schraubenfeder 33 ist sehr weich, d. h. sie übt nur eine sehr geringe Kraft auf den Kolben 6 und damit die Kolbenstange 7 aus. Sie ist nur so stark, daß sie bei Anlage des Schwimm-Kolbens 31 gegen den Ventilkörper 15 die geschilderte Dichtwirkung zuverlässig ausübt. Auf die Tiefenfederung hat sie keinen nennenswerten Einfluß. Um sicherzustellen, daß die Feder 33 mit den Schwimm-Kolben 31, 32 immer wieder nach unten zum Kolben 6 gleitet, kann in dem Paket 31, 32, 33 ein Gewicht 48 in Form einer Kugel angeordnet sein.

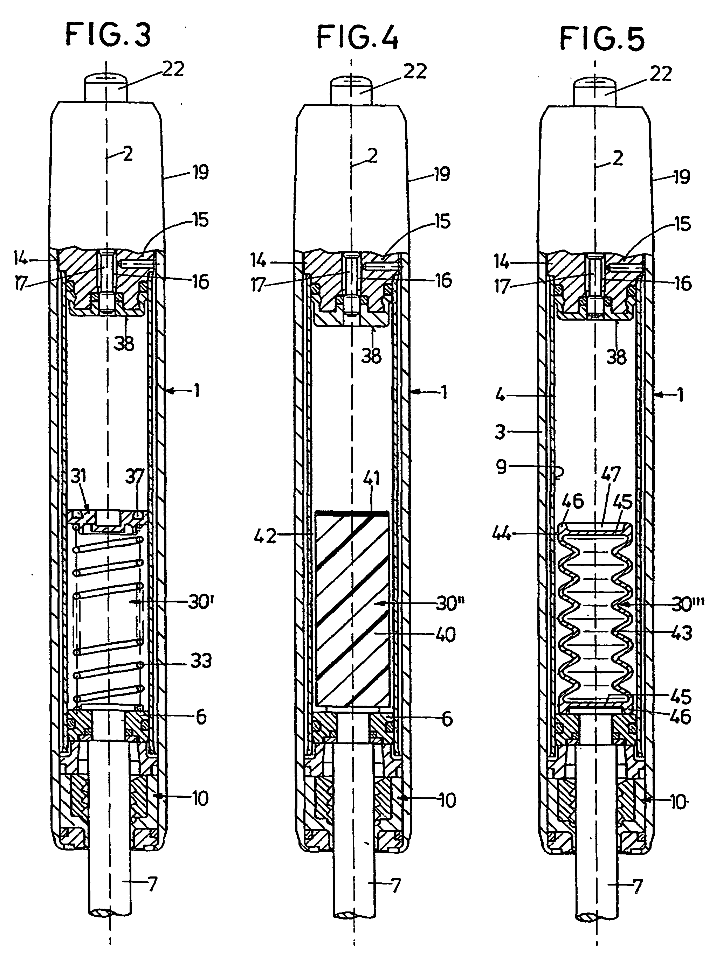

Bei der Ausgestaltung nach Figur 3 unterscheidet sich die Einrichtung 30' nur dadurch von der Einrichtung 30, daß der am Kolben 6 anliegende Schwimm-Kolben 32 weggelassen ist; die Schraubenfeder 33 stützt sich direkt gegen den Kolben 6 ab.

Bei der Ausgestaltung nach Figur 4 besteht die Einrichtung 30" im wesentlichen aus einer Schaumstoff-Feder 40, die aus einem zylindrischen Schaumstoff-Block aus offenzelligem Schaumstoff, beispielsweise offenzelligem Polyurethan-Schaumstoff, besteht. Es handelt sich um einen sogenannten Integral-Schaumstoff, der mindestens auf seiner dem Ventil 14 zugewandten Kreisfläche mit einer sogenannten Gießhaut, d. h. einer luftundurchlässigen, aber elastischen Schicht 41 versehen ist, die bei der Anlage der Feder 40 gegen die Dichtfläche 38 des Ventilkörpers 15 dicht gegen diese anliegt und den geschilderten Gasaustritt vom Ventil 14 in den Teil-Gehäuseraum 12 und umgekehrt unterbindet. Die Feder 40 hat ein einen Durchström-Kanal 42 bildendes Spiel gegenüber der Innenwand 9 des Innenzylinders 4, so daß das Gas an der Schicht 41 vorbei in die Zellen der Schaumstoff-Feder 40 gelangen kann und umgekehrt. Wie Figur 4 entnehmbar ist, ist bei dieser Ausführungsform der Ventil- Betätigungsstift 17 derart im Ventilkörper 15 versenkt angeordnet, daß der Betätigungsstift 17 beim Öffnen des Ventils 14 nicht aus dem Ventilkörper 15 in den Teil-Gehäuseraum 12 hinein austritt. Anstelle eines offenzelligen Schaumstoffs kann auch ein entsprechender offenzelliger Gummi als Werkstoff der Feder 40 eingesetzt werden.

Bei der Ausführungsform nach Figur 5 besteht die Einrichtung 30''' aus einer geschlossenen Gummi-Balg-Feder 43, die ebenfalls mit einem einen Durchström-Kanal 44 bildenden Spiel gegenüber der Innenwand 9 des Innenzylinders 4 angeordnet ist. Sie ist an ihren Enden mit einem Abschlußteller 45 versehen, von dem ein Ringdichtungs-Steg 46 in Richtung zum Ventilkörper 15 vorragt. Dieser Ringdichtungs-Steg 46 kommt beim Einschieben des Kolbens 6 in das Gehäuse 1 in der geschilderten Weise zur Anlage an der Dichtfläche 38 und setzt das Ventil 14 außer Funktion. Der bei geöffnetem Ventil 14 aus dem Ventilkörper 15 herausragende Teil des Ventil-Betätigungsstiftes 17 befindet sich hierbei in dem innerhalb des Steges 46 befindlichen Freiraum 47.

Die geschilderte Einrichtung 30, 30', 30'', 30''' kann naturgemäß auch bei längenverstellbaren Ein-Rohr-Gasfedern eingesetzt werden, bei denen das Ventil im Kolben angeordnet ist und durch eine in der Kolbenstange angeordnete Betätigungseinrichtung von außen betätigt wird. Derartige längenverstellbare Gasfedern werden in längenverstellbaren Stuhlsäulen in der Weise eingesetzt, daß die Kolbenstange nach oben herausgeführt ist und den Sitz trägt. Auch derartige längenverstellbare Gasfedern sind im großen Umfang bekannt. Bei einer solchen Ausgestaltung befindet sich die Einrichtung 30, 30', 30'', 30''' in dem Teil-Gehäuseraum zwischen dem das Ventil tragenden Kolben und dem unteren geschlossenen Ende des Gehäuses, also ebenfalls nicht in dem von der Kolbenstange durchsetzten Teil-Gehäuseraum.

## Patentansprüche

1. Längenverstellbare Gasfeder
mit einem Gehäuse (1) mit einer Mittel-Längs-Achse (2),
mit einer aus dem Gehäuse (1) konzentrisch zur Mittel-Längs-Achse (2) herausgeführten Kolbenstange (7),
mit einem an der Kolbenstange (7) angebrachten, im Gehäuse (1) verschiebbaren, das Gehäuse (1) in einen ersten Teil-Gehäuseraum (11) und einen zweiten Teil-Gehäuseraum (12) aufteilenden Kolben (6), wobei die Kolbenstange (7) den ersten Teil-Gehäuseraum (11) durchsetzt, und
mit einem Ventil (14) zum Verbinden der Teil-Gehäuseräume (11, 12) miteinander,
wobei im zweiten Teil-Gehäuseraum (12) eine Einrichtung (30, 30', 30", 30''') zum Verschließen des Ventils (14) angeordnet ist, die das Ventil (14) bei Erreichen einer vorgegebenen Mindest-Länge (a) des zweiten Teil-Gehäuseraums (12) verschließt, **dadurch gekennzeichnet,**
**dass** die Einrichtung (30, 30', 30", 30''') eine weiche Feder (30, 40, 43) mit einer bei Erreichen der vorgegebenen Mindest-Länge (a) des zweiten Teil-Gehäuseraums (12) an einer Dichtfläche (38) des Ventils (14) elastisch dichtend zur Anlage kommenden Dichtung (37, 41, 46) aufweist.

2. Gasfeder nach Anspruch 1, **dadurch gekennzeichnet,**
**daß** die Feder als Schraubenfeder (33) ausgebildet ist, die mindestens an ihrer dem Ventil (14) zugewandten Seite mit einem Schwimm-Kolben (31) versehen ist, der eine der Dichtfläche (38) des Ventils (14) zugewandte und zugeordnete Ringdichtung (37) aufweist.

3. Gasfeder nach Anspruch 1, **dadurch gekennzeichnet,**
**daß** die Feder als Gummi-Balg-Feder (43) ausgebildet ist.

4. Gasfeder nach Anspruch 3, **dadurch gekennzeichnet,**
**daß** die Gummi-Balg-Feder (43) mindestens an ihrer dem Ventil (14) zugewandten Seite mit einem Ringdichtungs-Steg (46) zur Anlage an der Dichtfläche (38) des Ventils (14) versehen ist.

5. Gasfeder nach Anspruch 1, **dadurch gekennzeichnet,**
**daß** die Feder als offenzellige Schaumstoff-Feder (40) ausgebildet ist.

6. Gasfeder nach Anspruch 5, **dadurch gekennzeichnet,**
**daß** die Schaumstoff-Feder (40) auf ihrer dem Ventil (14) zugewandten Seite mit einer gasdichten elastischen Schicht (41) zur Anlage an der Dichtfläche (38) des Ventils (14) versehen ist.

## Claims

1. An adjustable length gas spring comprising
a housing (1), which has a central longitudinal axis (2);
a piston rod (7) extended out of the housing (1) concentrically of the central longitudinal axis (2);
a piston (6), which is mounted on the piston rod (7) and displaceable in the housing (1), and which divides the housing (1) into a first partial volume (11) and a second partial volume (12), the piston rod (7) passing through the first partial volume (11); and
a valve (14) for connecting the partial volumes (11, 12) with each other; wherein a device (30, 30', 30", 30"') for closing the valve (14) is disposed in the second partial volume (12), closing the valve (14) when a predetermined minimum length (a) of the second partial volume (12) is reached,
**characterized**
**in that** the device (30, 30', 30", 30"') comprises a soft spring (30, 40, 43) with a seal (37, 41, 46) which is brought into elastically tight contact with a sealing face (38) of the valve (14) when the predetermined minimum length (a) of the second partial volume (12) is reached.

2. A gas spring according to claim 1, **characterized in that** the spring is a helical spring (33) which, at least on a side facing the valve (14), is provided with a floating piston (31), which has an annular seal (37) turned towards and allocated to the sealing face (38) of the valve (14).

3. A gas spring according to claim 1, **characterized in that** the spring is a rubber bellows spring (43).

4. A gas spring according to claim 3, **characterized in that**, at least on a side facing the valve (14), the rubber bellows spring (43) is provided with an annular sealing rib (46) for resting on the sealing face (38) of the valve (14).

5. A gas spring according to claim 1, **characterized in that** the spring is a spring (40) of open-cell foamed material.

6. A gas spring according to claim 5, **characterized in that,** on a side facing the valve (14), the spring (40) of foamed material is provided with a gas-tight elastic layer (41) for resting on the sealing face (38) of the valve (14).

## Revendications

1. Ressort à gaz réglable en longueur, comprenant un corps (1) avec un axe longitudinal médian (2), une tige de piston (7) guidée hors du corps (1) concentriquement à l'axe longitudinal médian (2), un piston (6) disposé sur la tige de piston (7), pouvant se déplacer dans le corps (1), divisant le corps (1) en un premier espace de corps partiel (11) et en un deuxième espace de corps partiel (12), sachant que la tige de piston (7) traverse le premier espace de corps partiel (11), et une vanne (14) destinée à relier les espaces de corps partiels (11, 12) entre eux, dans lequel un dispositif (30, 30', 30'', 30''') destiné à fermer la vanne (14) est disposé dans le deuxième espace de corps partiel (12), lequel ferme la vanne (14) lorsqu'une longueur minimale (a) prédéterminée du deuxième espace de corps partiel (12) est atteinte, **caractérisé en ce que** le dispositif (30, 30', 30'', 30''') comporte un ressort souple (30, 40, 43) avec un joint d'étanchéité (37, 41, 46) venant en contact sur une surface d'étanchéité (38) de la vanne (14) en faisant étanchéité de manière élastique lorsque la longueur minimale prédéterminée (a) du deuxième espace de corps partiel (12) est atteinte.

2. Ressort à gaz selon la revendication 1, **caractérisé en ce que** le ressort est conçu comme un ressort à boudin (33) qui est muni au moins sur sa face tournée vers la vanne (14) d'un piston flottant (31) qui comporte un joint d'étanchéité annulaire (37) tournée vers la surface d'étanchéité (38) de la vanne (14) et associé.

3. Ressort à gaz selon la revendication 1, **caractérisé en ce que** le ressort est conçu comme un ressort à soufflet en caoutchouc (43).

4. Ressort à gaz selon la revendication 3, **caractérisé en ce que** le ressort à soufflet en caoutchouc (43) est muni au moins sur sa face tournée vers la vanne (14) d'une nervure de joint d'étanchéité (46) destinée à venir en contact sur la surface d'étanchéité (38) de la vanne (14).

5. Ressort à gaz selon la revendication 1, **caractérisé en ce que** le ressort est conçu comme un ressort en mousse à alvéoles ouvertes (40).

6. Ressort à gaz selon la revendication 5, **caractérisé en ce que** le ressort en mousse (40) est muni sur sa face tournée vers la vanne (14) d'une couche élastique étanche aux gaz (41) destinée à venir en contact sur la surface d'étanchéité (38) de la vanne (14).
